# EUROPEAN PATENT SPECIFICATION

(11) **EP 4 605 207 B1**
(45) Date of publication and mention of the grant of the patent: **08.07.2026**
(21) Application number: 23703873.2
(22) Date of filing: 30.01.2023
(51) Int. Cl.: B29C 33/30, B29C 33/40, B29C 70/46, B29D 99/00, B29C 70/48, B29C 70/08, B29C 70/44

(54) **TOOL ASSEMBLY WITH INTERCHANGEABLE INSERT FOR MANUFACTURING OF RIBBED COMPOSITE PART AND MANUFACTURING METHOD**
WERKZEUGANORDNUNG MIT AUSTAUSCHBAREM EINSATZ ZUR HERSTELLUNG EINES GERIPPTEN VERBUNDTEILS UND HERSTELLUNGSVERFAHREN
ENSEMBLE OUTIL AVEC INSERT INTERCHANGEABLE POUR LA FABRICATION D'UNE PIÈCE COMPOSITE NERVURÉE ET MÉTHODE DE FABRICATION

(43) Date of publication of application: 27.08.2025
(73) Proprietor: BCOMP SA, 1700 Fribourg (CH)
(72) Inventor: RION, Julien, 1687 Vuisternens-devant-Romont (CH); CARRON, Julien, 1618 Châtel-Saint-Denis (CH); WEISSENBORN, Oliver, 4125 Riehen (CH)
(74) Representative: P&TS SA (AG, Ltd.)
(86) International application number: PCT/IB2023/050785
(87) International publication number: WO 2024/161175

(56) References cited:
- DE-A1- 102012 000 822
- US-A1- 2013 344 266

## Description

### Technical domain

The present invention concerns a tool assembly for manufacturing fibre composite products, notably natural fibre composite products. More precisely, the present invention concerns a tool assembly for manufacturing yarn-reinforced, thin-walled composite products.

Such a tool assembly can be used for the manufacture of a yarn-reinforced, thin-walled composite product, such as described in EP2648890 (family member of US2013344266A1), EP3999326 and EP4058623. In such applications, the thin-walled composite product has one ribbed face which shape has to be kept unchanged, namely the ribs should not be flattened nor sink too much into the thin-walled composite to keep good mechanical properties provided by the ribs to the product. In such thin-walled composite products, ribs form together a grid with a defined shape and high adhesion to the underlaying composite layer.

In other cases, there could be situations where a product to be put in a compressing mould has relief elements on one side, with those relief, notably protruding elements, forming stiffeners which volume have to be kept unchanged or relatively not too much lowered during the manufacturing process of the composite product.

Such a composite product forms in particular a portion of an article such as, non-limitingly, a car bodywork part, in particular the doors, the top, the hood, the fenders, the spoiler, the front and rear bumpers, the aerodynamic sets, or an interior car part, in particular the door covers, the dashboard, pillar or console cover panel, the central console, the pillar trims, the trunk trim, the trunk cover, the roof, seatbacks, map-pocket, window frame, frunk or sporting articles such as a hull of a canoe, kayak or light boat, a seat post, a bicycle saddle, a bicycle frame, a bicycle handlebar, a baseball bat, a paddle, a ski stick or walking stick, or else a furniture element, or a suitcase shell, or aircraft interior parts, in particular the lateral panels, the ceiling panels, the luggage compartments, or aerodynamic parts of light aircraft, in particular the engine cowl, the wheel caps, or any aerodynamic fairing of a mobile machine.

Such a composite product can have a multitude of geometries, including a planar sheet, a non-planar sheet, and in particular a sheet with a convex face and a concave face, or else a corrugated sheet, a three-dimensional hollow shape, and in particular a hollow tube of circular cross section, of polygonal cross section or another shape, and in particular any thin-walled, three-dimensional shell.

There are various arrangements of thin-walled, reinforced composite products, for example, a composite product having a matrix made of plastics material from among a polymer or a resin and a reinforcement which can in particular be in the form of a preform with yarns. The thin-walled, reinforced composite product has a thin wall, which means that it is generally initially in the form of a sheet or a panel, one of the dimensions of which is much smaller (at least 10 times smaller) than the other two dimensions of the product.

### Related art

Up to now, the applicant uses a metal tool in combination with a silicone layer, the latest forming a soft layer allowing for a near net shaped compression of the composite structure with reinforcement ribs made from protruding fibre yarns. This solution requires the casting of the silicone layer inside the tool and removal after the use-phase. After lifetime of the silicone ends, the used silicone layer has to be removed and applying a new silicone layer is required. More precisely, this silicone gets worn when producing parts. Replacement of silicone layer is a time-consuming process due to the high mechanical effort (milling and/or manual grinding) for removing the worn silicone and the thorough preparations needed for casting of a new virgin layer (e.g. surface cleaning, adding of primer). These steps of removing and replacing the silicone layer is time consuming and labour-intensive, which therefore reduce process efficiency by increasing production downtimes and increases process-related costs.

### Short disclosure of the invention

An aim of the present invention is the provision of a tool assembly that overcomes the shortcomings and limitations of the state of the art.

Another aim of the invention is providing a tool assembly enabling an easy and flexible release and replacement of the silicone or any other soft layer in the mould.

According to the invention, these aims are attained by the object of the attached claims, and especially by a tool assembly for manufacturing thin-walled composite part with one ribbed face covered with ribs made from fibre yarns, comprising:
- a first compression tool forming a core half ( female ) with a useful face,
- a second compression tool forming a cavity half (male)with a useful face, said first and second compression tools being arranged to cooperate together with their useful face facing each other in a moulding position where said useful faces delimit a cavity,
- a mould insert placed on the useful face of the first compression tool,

wherein said mould insert comprises a support made in a first material having a first tensile Young's modulus larger than 1 GPa, which support is removably attached on the useful face of the first compression tool and a elastomeric layer mounted on the support, said elastomeric layer being made in a second material having a second tensile Young's modulus,
wherein said second tensile Young's modulus is at least 100 times smaller than the first tensile Young's modulus, and wherein said elastomeric layer has a thickness between 1 and 10 millimetres.

With respect to what is known in the art, the invention provides the advantage that a mould insert is used, which is not only made from a soft layer such as silicone or another elastomeric layer, but also has a relative more rigid support which enables the easy removal and replacement of the mould insert.

The thickness between 1 and 10 millimetres of the elastomeric layer, such has silicone, is measured without any compression. It allows a good compression of the preform or the composite fabric with the yarns destinated to form the ribs but keeping the shape of these yarns destinated to form the ribs.

As in the prior art, the cavity which is formed between said first and second compression tools in their moulding position has a shape corresponding to the composite part to be manufactured.

The Young's modulus is measured by a tensile test, in particular in accordance with the standard DIN EN ISO 527 for textile-reinforced composite materials or with the standards ASTM E8/E8M for metallic materials. In accordance with these standards, what is involved is the modulus of elasticity in tension *E*ₜ determined by the slope of the stress/strain curve σ(ε) in the linear elastic region of the stress-strain-curve, e.g. the interval between the two deformations ε1 = 0.05% and ε2 = 0.25% according to DIN EN ISO 527. For the elastomeric materials either the ASTM D412 standard or the ISO37:2017 standard is used for measuring Young's modulus also by a tensile test. With elastomers usually the linear portion of the stress-strain-curve not necessarily in the range of ε1 = 0.05 % and ε2 = 0.25 % is used to define the Young's modulus, by taking the actual strain values of the linear curve into account.

In a possible embodiment, the second material forming the elastomeric layer, has a hardness which is less or equal to 40 shore A, preferably between 10 and 35 shore A. These values have been found to provide good results for the elastomeric layer to be able to conform the shape of these yarns destinated to form the ribs.

Also, in a possible embodiment, in said moulding position of said first and second compression tools, a tool gap volume between the elastomeric layer and the second compression tool corresponds to 0.9 to 1.1 times the end volume of the thin-walled composite part moulded in said tool assembly.

According to some embodiments of the tool assembly, said first material has a first tensile Young's modulus larger than 10 GPa , said elastomeric layer being made in a second material having a second tensile Young's modulus, and said second tensile Young's modulus is at least 1000 times smaller than the first tensile Young's modulus.

According to some embodiments of the tool assembly, said first material has a first tensile Young's modulus larger than 50 GPa, said elastomeric layer being made in a second material having a second tensile Young's modulus, and said second tensile Young's modulus is at least 5000 times smaller than the first tensile Young's modulus. In some embodiments, said first material has a first tensile Young's modulus between 50 and 75 GPa.

According to some embodiments, the tool assembly according to the present invention further comprises fixing means mounting system for removable attachment of the mould insert to the first compression tool. Those fixing means can encompass several different types of solution for assembling the mould insert to the first compression tool, including but non-limited to mounting systems, notably friction due to the attachment of neighbouring material surfaces or other mechanical mounting systems, chemical bonding, magnetic attachment or vacuum retaining means. The invention also concerns methods for manufacturing a thin-walled composite part with one ribbed face covered with ribs made from fibre yarns, with the use of the tool assembly described in the present text.

### Short description of the drawings

Exemplar embodiments of the invention are disclosed in the description and illustrated by the drawings in which:
- Figure 1 illustrates a perspective view of a composite part manufactured with the tool assembly according to the invention;
- Figure 2 schematically shows certain steps of a treatment and strengthening method for manufacturing composite parts formed by ribbed sheets with the tool assembly according to the invention;
- Figure 3 illustrates a section view of a tool assembly with a silicon layer according to the prior art;
- Figure 4 schematically illustrates a manufacturing step of the tool assembly of Fig 3, where the silicon layer is cast;
- Figure 5 shows a section view of a tool assembly according to the invention with a mould insert of a first type;
- Figure 6 shows a section view of a tool assembly according to the invention with a mould insert of a second type;
- Figure 7 shows a section view of a tool assembly according to the invention with a mould insert of a third type;
- Figure 8 shows a section view of a tool assembly according to the invention with a mould insert of a fourth type;
- Figure 9 shows a section view of a tool assembly according to the invention with a mould insert of a fifth type;
- Figure 10 illustrates a half section view of a tool assembly according to the invention with a first variant of the fixing means for the mould insert;
- Figure 11 illustrates a half section view of a tool assembly according to the invention with a second variant of the fixing means for the mould insert;
- Figure 12 illustrates a half section view of a tool assembly according to the invention with a third variant of the fixing means for the mould insert;
- Figure 13 illustrates a half section view of a tool assembly according to the invention with a fourth variant of the fixing means for the mould insert;
- Figure 14 illustrates a half section view of a tool assembly according to the invention with a fifth variant of the fixing means for the mould insert; and
- Figure 15 illustrates a half section view of a tool assembly according to the invention with a sixth variant of the fixing means for the mould insert.

### Examples of embodiments of the present invention

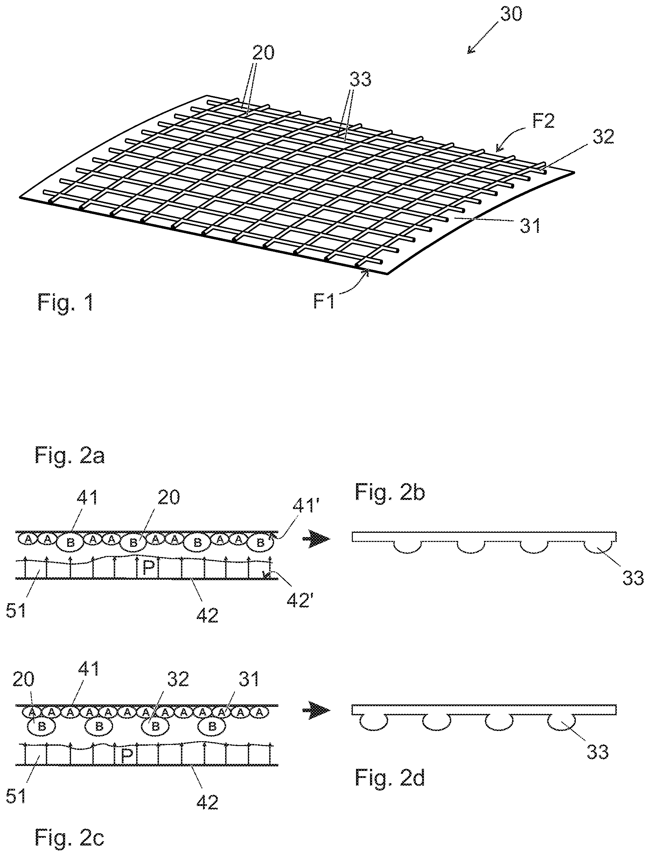

With reference to figure 1, a composite product 30 has a first layer 31 superimposed with a second layer 32 forming a grid of yarns 20. More specifically, this second layer 32 has yarns 20 distributed between a first series of mutually parallel yarns 20 and a second series of mutually parallel yarns 20, the direction of the first series forming with the direction of the second series an angle of between 30° and 90° so as to form a mesh grid in the shape of a quadrilateral (90° in figure 1, where the second layer 32 is a rectangular mesh grid of yarns 20).

In the case of figure 1, the first layer 31 belongs for example to the group comprising a standard weave, a woven fabric or a non-crimp fabric (in particular a fabric of flax yarns, or of carbon fibres, glass fibre or polymer fibres) or a mat of plant fibres, of carbon fibres, of glass fibres or of polymer fibres, a metal sheet, an aluminium sheet, and a polymer sheet. Other methods may be used to obtain such fabrics, such as weaving, knitting, braiding and stitching to make non-crimp fabrics. Alternatively, the yarns can be maintained together by a polymer, either a thermoset resin being cured in subsequent process steps, or a polymer dissolved or melt prior to impregnation of the tissue with a resin.

The yarns 20 of the second layer 32 belong for example to the group comprising flax, hemp, jute, ramie, kenaf, sisal, henequen, bamboo, silk, or cotton. Alternatively, one of the types of fibres may be a non-natural type of fibre, such as carbon, glass or synthetic fibres for example.

Alternatively, all of or part of these yarns 20 are hybrid yarns as follows. Such hybrid yarns have a core made from a first material having a density of less than 1500 kg/m³ and a covering that overlays the core, the covering being made from a second material, said second material being different than the first material and having a longitudinal Young's modulus (along the axis of the hybrid yarn) of greater than 25 GPa. The use of these hybrid yarns makes it possible to optimize both the radial compressive strength necessary to withstand the pressure during implementation and to create ribs, this strength being provided essentially by the core of the yarn, and the longitudinal flexural strength and stiffness of the yarn, this being provided essentially by the covering. The core of the hybrid yarns is preferably formed by plant fibres from among the fibres of the following plants: flax, hemp, sisal, jute, abaca, kenaf, coconut, cotton, nettle, ramie, kapok, abaca, henequen, pineapple, banana plant, palm, wood, these fibres being impregnated with an organic matrix in the form of a polymer. The covering of the hybrid yarns is possibly formed by carbon fibres impregnated with an organic matrix in the form of a polymer. Alternatively, the covering 22 is formed by one or more strips of high-quality plant fibres. This or these strip(s) is (are) in the form of (a) roving(s) or (a) strand(s) essentially having long fibres. WO2021/00958 describes the use of such hybrid yarns, and other embodiments of hybrid yarns, in a thin-walled composite product.

Alternatively, all of or part of these yarns 20 are impregnated yarns as follows. Such impregnated yarns have at least two continuous strands comprising plant fibres, with a first individual twist of the strands in a first direction (each of said strands has an individual twist in a first orientation) and a second overall twist of the strands in a second direction different from the first direction (all of said strands have an overall twist in a second orientation different from the first orientation). Preferably, said strands are impregnated with thermoplastic material in at least 60% of their volume, each of said strands being individually twisted and all of said strands also being twisted into a configuration held by the thermoplastic material. Such an impregnated yarn thus exhibits both an individual strand twist and also an overall twist. It is understood that the thermoplastic material allows the formation of a bond between all the strands/filaments both in their individual twisted configuration (individual strand twist) and also in their twisted configuration together (overall twist of the strands resulting in a twisted yarn). Such impregnated yarn forms a yarn with high mechanical performance. Among other things, such an impregnated yarn has improved bending, tensile and compressive strength due to this double level twist, for each strand and between all strands. In a possible implementation, the impregnated yarn further comprises at least one binding wire helically wound around all of said strands, forming an impregnated and tied yarn. Such a binding wire improves the shape retention of the yarn section and will in particular contribute to limit the crushing of the yarn intended to form a rib on the surface of a thin-walled composite product. This binding wire is therefore optional. If this binding wire is present around the impregnated yarn, two helically wound binding wires can be provided as an alternative, which can be in the same direction, or preferably in the opposite direction.

WO2021094499 describes the manufacturing process and the use of such yarns, and of other embodiments of impregnated yarns, in a thin-walled composite product.

Alternatively, the first layer 31 and second layer 32 form together a fabric. Such fabrics are obtained either in one process step, using yarns of one or different thicknesses in conjunction with textile manufacturing equipment, processing the said yarns into the final textile architecture, where some of the yarns are placed such to build the second layer 32 with ribs once the textile is processed into the final composite part, as will be explained below.

The organic matrix of the composite product 30 is a matrix of plastics material from among a polymer or a resin, and in particular from among a thermosetting polymer (in particular a resin) and a thermoplastic polymer

The composite product 30 is preferentially composed of combination of flax fibres and either a thermoset resin (such as epoxy, polyurethane, polyesters, phenolic resins), or a thermoplastic polymer such as Poly(lactic acid) (PLA), Poly(propylene) (PP), or any type of Poly(amide) (PA).

The thickness of the composite product 30 is below 10 mm (between 1 and 10 millimetres) and ranges preferably between 1 and 5 mm, including the ribs formed by the second layer 32.

Figure 2 shows an illustration of the treatment and consolidation steps in the case of a composite product 30 with a planar surface and a ribbed surface as for the composite product 30 of figure 1. Such a composite product 30 has one single ribbed face. In figures 2a and 2b, the composite product 30 has a single layer comprising both a first type of yarns (A) having a first thickness and a second type of yarns (B) having a second thickness greater than the first thickness. In figures 2c and 2d, the composite product 30 has two layers 31 (first type of yarns A) and 32 (second type of yarns B). The preform is pressed against the useful face 41' of a stiff second compression tool 41 to get a planar surface (even face F1). When the yarns A and B of the preform form a dry woven fabric, impregnation with a thermoplastic resin or thermosetting resin is initiated and carried out before, during or just after the increase in pressure. The pressure may be applied using a flexible membrane 51 or a flexible pad (which does not need to be an inflatable bladder, although it may be) on the one side aimed to form the ribs 33 of the ribbed face F2 (second layer 32 in figures 2c and 2d) and applying a pressure P to this flexible membrane 51 (figures 2a and 2c) that is placed in on a first compression tool 42, on its bottom face. The flexible membrane 51 adapts to the woven fabric of variable thickness. The temperature of the second compression tool 41 is then increased so as to (i) reduce the viscosity of the polymer and optimize the impregnation of the fibres of yarns A and B, and (ii) consolidate the part by crosslinking in the case of the organic matrix is a thermoset resin. In the case of a thermoplastic matrix, consolidation occurs after heating when the temperature of the second compression tool 41 is set to a temperature below the glass transition temperature of the polymer. The method may also be applied to singly curved or doubly curved surfaces or more complex geometry surfaces of the composite product 30. The composite product 30 obtained (figures 2b and 2d) has ribs 33 at the location of the yarns 20 (yarns B).

In the previous paragraph, and in the following text, when relating to the description of the examples shown in the figures, the first compression tool 42 (cavity half or female) is a lower compression tool with a mould insert 50, and the second compression tool 41 (core half or male) is an upper compression tool which is stiff. Depending on the arrangement, this situation can be inversed, with the first compression tool 42 (cavity half or female) being an upper compression tool, and the second compression tool 41 (core half or male) is a lower compression tool. Alternatively, these first and second compression tools can be placed in a vertical or almost vertical position with their useful face facing each other. These first and second compression tools 42, 41 form the first and second parts of a mould used to manufacture the composite product 30 from a preform used as intermediate part.

In terms of fibre impregnation and consolidation, different process routes may be applied. In one possible process route, a fabric, commonly known as the preform, may consist of comingled yarns combining both polymer- and reinforcement fibres in the said yarns, whereas the thermoplastic polymer impregnates the surrounding fibres when the temperature is increased using a heating device e.g. an infrared oven or convection oven above its melting temperature. Then, the hot preform is placed in the mould for part consolidation (isothermal process). Alternatively, the cold preform is placed in a hot mould with the impregnation occurring during the pressing process and consolidation occurs after cooling of the same mould (variothermal process). Alternatively, the thermoplastic polymer can be added in form of powder or film layers in the mould before heating. According to another possibility, the yarns are pre-impregnated with a thermoset resin, which solidifies through molecular cross-linking once the temperature is increased. Alternatively, the dry fabric may also be impregnated with a liquid polymer after the fabric has been placed in the mould.

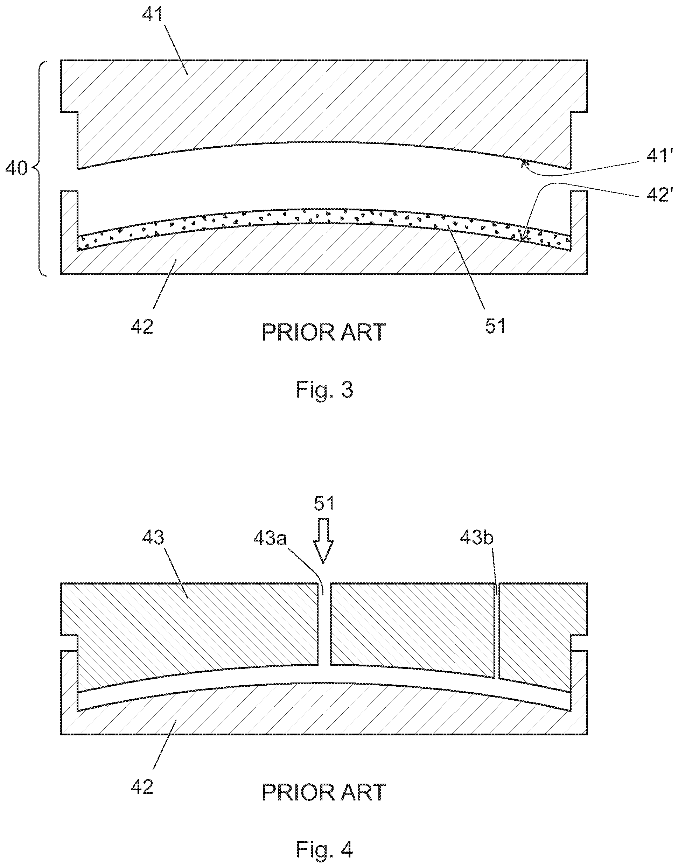

According to a prior art technique, the preform (already containing the polymer or not) is placed inside the first compression tool 42, where a flexible membrane formed by an elastomeric layer 51 covers the useful face 42' of the first compression tool 42 (see Figure 3). In the case where the preform does not yet contain the polymer, impregnation of the fibres is conducted at this stage, using methods such as Resin Transfer Moulding (RTM) or Vacuum Assisted Resin Infusion (VARI), while or after the pressure P on the preform has been increased. Pressure is applied using a second compression tool 41 forming a tool assembly 40 with the first compression tool 42. Figure 3 shows this tool assembly in an open position.

The flexible layer 51 or pad, which is placed inside the tool assembly, faces the face of the preform or the composite fabric with the yarns 20 destinated to form the ribs of the composite product 30. When in closed, moulding position, the tool assembly shown in Figure 3 press the preform or the composite fabric, conforming the latter to the mould shape while the flexible layer 51 allow the yarns 20 to stay protruding thereby keeping the ribbed shape of the corresponding face. In the case of the thermoplastic-based commingled yarns, the preform is heated using an infrared- or convection oven with the temperature is set such to melt the thermoplastic, which impregnates the adjacent reinforcement fibres. With the isothermal mould 41+42, the thermoplastic polymer solidifies, and the rigid composite part can be removed from the mould. Alternatively, the entire preform can be placed in a hot tool, which will impregnate the fibres during pressing and consolidate after cooling of the same tool (variothermal process). In the case of a thermoset-based composite, temperature is set such to trigger crosslinking of the polymer which leads to solidification, the composite part being removed once the solidification is completed. Due to the flexible membrane 51 adapting to the contours locally predetermined by each of the yarns 20, stiffeners are formed at places of thicker fibre yarns (Yarns B).

The flexible layer 51 or pad is preferably a silicone layer of thickness of at least 2 millimetres, covering directly the useful face 42' of the first compression tool 42 forming the mould lower part.

In relation to figure 4, is now explained the preparation of the first compression tool 42 for casting the silicone layer. The mould surface of the first compression tool 42 is treated with a primer to ensure good adhesion of the silicone layer after casting and reticulation. For casting the silicone (see arrow 51 in figure 4), a mask 43 with the complementary shape of the first compression tool 42 is used and put in place within the first compression tool 42, with a distance between their facing surfaces. This mask 43 can be metallic or made from composite material. This mask 43 comprises a through hole 43a for the passage of the liquid silicone in the space defined between the tool mask 43 and the first compression tool 42. The mask 43 also comprises at least one through hole 43b for the passage and escaping of entrapped air. The surfaces of the tool mask 43 are treated with a release agent so that after cooling of the silicone layer covering the useful face 42' of the first compression tool 42, the mask 43 can be pulled out without adhering to the silicone layer which is adhesive to the first compression tool 42.

As previously explained above, although this prior art solution is very beneficial due to the low technical complexity of creating the silicone layer inside the tool geometry, there are some disadvantages. The worn-out silicone layer needs to be removed from the first compression tool 42 after a defined number of cycle-times. The replacement of silicone layer is a time-consuming process which reduces significantly the process efficiency and the use of multiple identical tools as supplement for the first compression tool generally linked to unreasonably high investment costs.

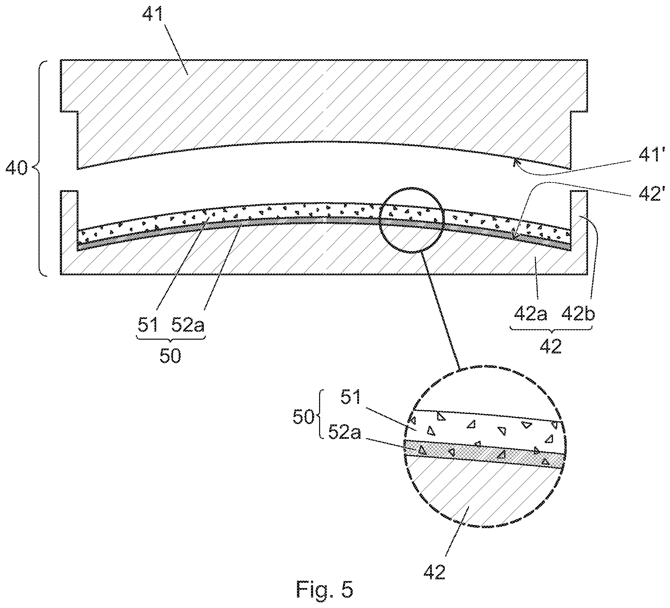

Figures 5 to 9 presenting several non-limited possibilities of mould inserts 52 for the tool assemblies 40 according to the invention, which are now described.

In the present text, when describing the figures, said first compression tool 42 is the first half of the mould and has a useful face being defined by a bottom portion 42a and a side portion 42b . In the same way, when describing the figures, said second compression tool 41 is the second half of the mould.

Second compression tool 41 and first compression tool 42 are for example steel parts.

According to the invention, the first compression tool 42 is covered by a mould insert 50 with a support 52 located on the useful surface of the first compression tool42 and an elastomeric layer 51, such as silicone layer, superposed on the support 52.

The solutions presented in relation to figures 5 to 8 relate to the use of a mould insert where the support 52 for the elastomeric layer 51 is a composite support. Several different types of support are described, and respectively referenced 52a, 52b, 52c and 52d.

Referring to figure 5, the first compression tool 42 is covered by a support of the first type, which is a composite support 52a formed by a textile fabric impregnated with an elastomeric material which is the same elastomeric material as in said elastomeric layer 51, notably silicone. The composite support 52a forms a textile substrate. The composite support 52a is formed by one or several layers of textile reinforcements, which are draped manually and fixed in position relative to each other using an adhesive. This constitutes a pre-draped dry textile substrate. Alternatively, this operation can be implemented directly in the first compression tool 42. This forms a dry textile support placed in the first compression tool 42 before casting the second material forming the elastomeric layer 51 (i.e. notably silicone). A treatment of fabric with a primer can be used to increase adhesion between the textile fabric and elastomeric material/silicone. Preferably, before installing the textile fabric in the first compression tool 42, the latter is cleaned, for instance by isopropanol alcohol, and treated with a release-agent. Then, the silicone is casted, using the tool mask 43 as previously described, it impregnates the layers of textiles, forming thereby the composite support 52a. During casting, an additional volume of second material creates the elastomeric layer 51 overlapping the composite support 52a with a strong interlocking between them.

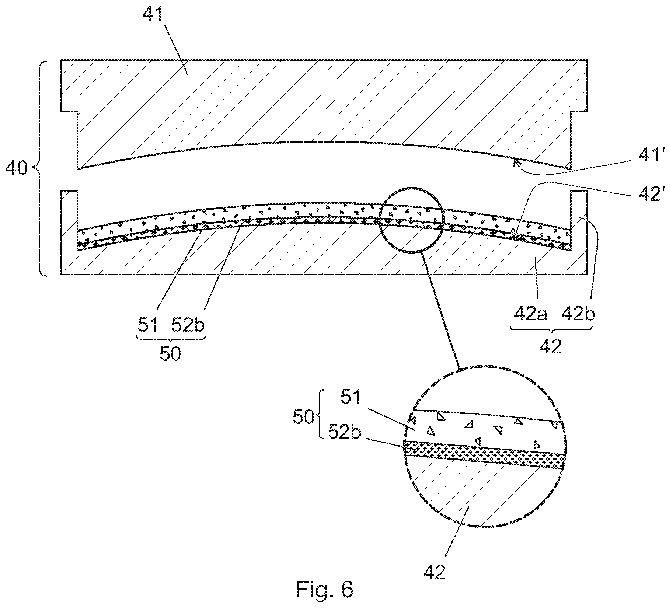

Referring to figure 6, the first compression tool 42 is covered by a support of the second type, which is a thermoset composite support 52b. According to a first possibility, this support 52b is formed by a thermoset composite layer comprising a textile fabric impregnated with a thermoset resin. To that end, a lamination process can be used with several superposed layers of dry textile as reinforcement, and e.g. an epoxy-based resin as matrix.

According to a second possibility, this support 52b is formed by a prepreg, namely a pre-impregnated composite material such as carbon, graphite, glass or natural fibres that have been pre-impregnated with a resin matrix such as epoxy resin. After having been cut to the desired shape, the prepreg (or several layers of prepreg) is laid into the first compression tool 42.

Beforehand, the first compression tool 42 is preferably treated with a release agent to improve future demoulding of this support 52b.

Heat, pressure and vacuum are then applied for the specified amount of time and then the support 52b is cured.

To compact the material of the support 52b, a vacuum film with bleeder and release film and optionally a peel-ply can be applied on the top also with adequate temperature, thus forming the support 52b with a thickness depending on the textile fabric grammage and the number of layers.. Additionally, in case of prepreg material, a higher compression force and higher processing temperatures could be achieved by using an autoclave device to further improve support 52b properties.

Prior to silicone (or elastomer) casting, the thermoset composite support 52b is demoulded, the release film removed, the surface of the thermoset composite support 52b is sandblasted, cleaned by pressurized air and isopropanol before treated with a specific primer. In case a peel ply is used, it is removed from the surface and primer can be applied directly without further treatment. The thermoset composite support 52b is again put into the first compression tool 42 and the casting-mask 43 is applied. Since the cavity already contains the thermoset composite support 52b, the final silicone material mass needs to be adapted. Afterwards, there is casting of the silicone layer 51 on the thermoset composite support 52b, according to the previously described procedure.

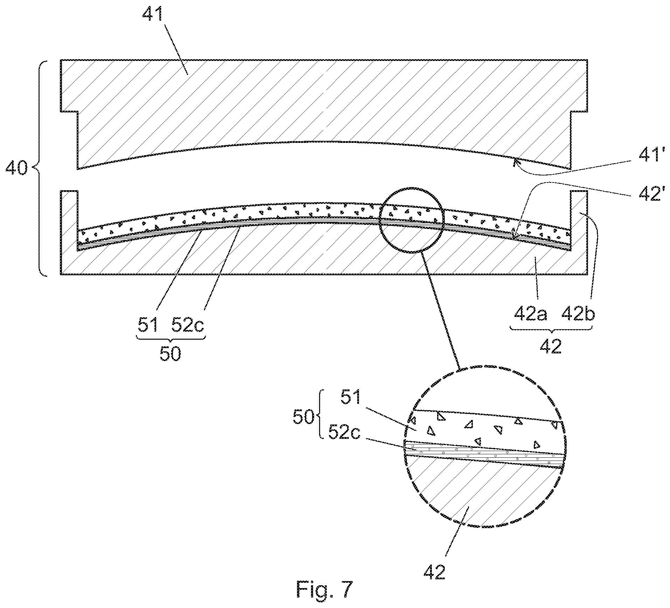

Referring to figure 7, the first compression tool 42 is covered by a support of the third type, which is a thermoplastic composite support 52c. This thermoplastic composite support 52c is formed by a thermoplastic composite layer comprising a textile impregnated with thermoplastic matrix. Said textile is formed by carbon, glass, polymer, or natural fibres or a combination of said fibres. Said textile can be a fabric, namely a woven textile, a non-woven textile or the result of the use of any preceding base material(s) with additional step(s) like stitching or similar.

The support material consists of an thermoplastic composite layer, which will be manufactured to the 3D-shape by a thermoforming process using the first compression tool 42 (or a separate tool with the first compression tool geometry) and a pre-cast silicone layer as second tool for this thermoforming process, or a separate second tool insert. The thermoplastic composite support 52c requires to have the shape of the first compression tool 42 with a minimal thickness.

Prior to casting the silicone layer 51, the support 52c surface is sandblasted to create a defined roughness. Cleaning of the support 52c with pressurized air and isopropanol is preferably required before applying a primer. The support 52c will be then placed again in the first compression tool 42. Afterwards, there is casting of the silicone layer 51 on the thermoplastic composite support 52c, according to the previously described procedure, using the silicone mask 53.

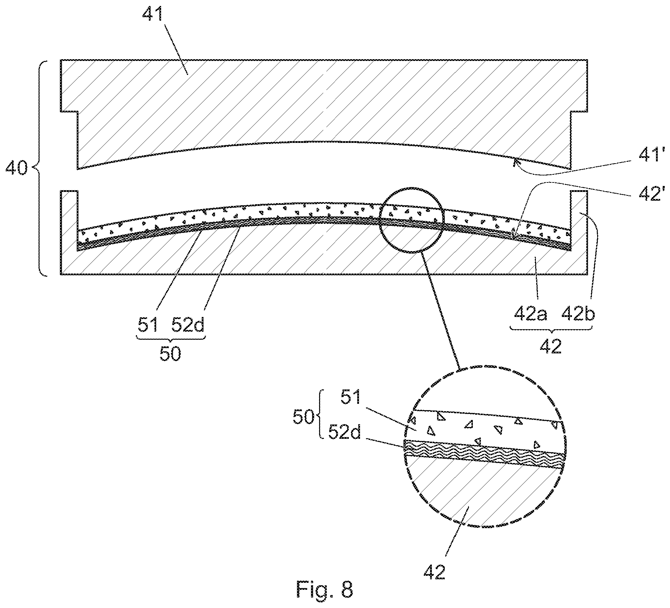

Referring to figure 8, the first compression tool 42 is covered by a support of the fourth type, which is a reinforced film support 52d. Such a support 52d is formed using for example a reinforced film or sheet.

Such a reinforced film is cut and draped in the first compression tool 42. Then, similar to the support manufacturing using a thermoplastic composite support 52c, a pre-cast silicone layer will be needed to press the final support 52d thickness. Alternatively, the reinforced foil can be treated like the "dry-fabric"-solution (support 52a of figure 5 which comprises a textile fabric impregnated with a silicone matrix.) and silicone casting can be done directly after draping of the reinforced film.

Afterwards, there is casting of the silicone layer 51 on the thermoset composite support 52d, according to the previously described procedure, using the silicone mask 53.

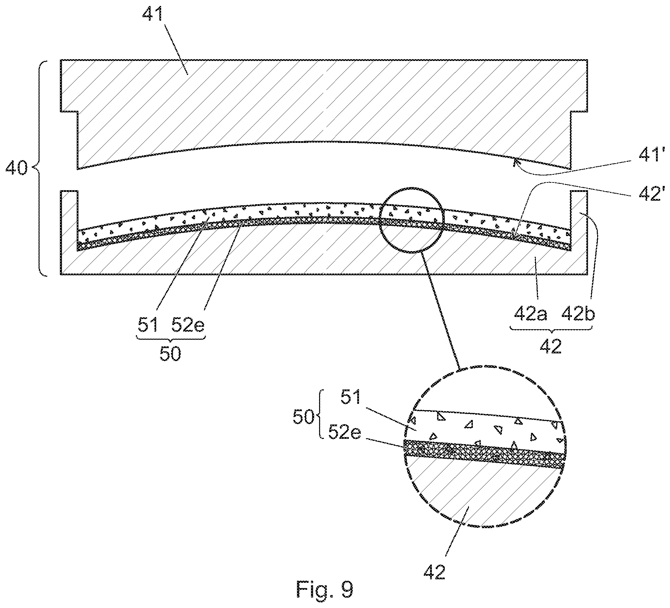

The solutions presented in relation to figure 9 relates to the use of a mould insert where the support for the elastomeric layer 51 is a metallic support 52e forming a support of the fith type. Said metallic support 52e is for instance a metallic mesh, a metallic sheet, a metallic plate or a metallic grid. These solutions correspond to the use of a support which is made of a metallic substrate.

A flat metal mesh or sheet is used as material. In detail, metal mesh structures with different grid properties (mesh size, sheet thickness, material) or sheets with specific thickness should be selected which compromise a high deformability for complex shapes and mechanical properties to serve as a rigid base material. As a non -limitative metal or metal alloy, aluminium or steel alloy can be used. In order to create the support shape, a forming process is used with the lower compression tool 42 and a pre-cast silicone layer with a thickness less than the final tool gap. Depending on the structure of the grid (e.g. mesh size, sheet thickness) or the sheet, different deformation patterns might occur, leading to less suitability for complex shaped parts. By choosing the right material-specific and structure-related properties of the metallic mesh/sheet for making the metallic support 52e, a complex shaped part can be manufactured. Afterwards, there is casting of the silicone layer 51 on the metallic support 52e, according to the previously described procedure, using the silicone mask 53. During silicone casting, if a metal mesh grid was used to form the metallic support 52e, it is impregnated by the silicone, which creates a strong interlocking between them.

Preferably, prior to silicone (or elastomer) casting, the metallic support 52e is treated with an isopropanol and a material specific primer to further increase adhesion quality between metal grid/sheet and silicone. However, adhesion is also affected by the high degree of interlocking between the grid structure of the metal and the silicone during casting.

It is to be noted that the first compression tool 42 often requires one or several specific moving areas for helping in the demoulding of the part 30. These are ejectors (not shown) having a smaller surface compared to the entire tool, namely the first compression tool 42, their covering by the mould insert 50 formed by the superposition of the support 52 (in any of the solutions presented above) and the elastomeric layer 51, notably silicone, can be simplified and replaced by any of the following solutions. The ejector forming a rigid substrate made of metal, thermoset or thermoplastic composite support, it can be directly covered by the elastomeric layer 51, notably silicone. To that end, for example, the silicone layer can be pre-cast, forming a silicone pad applied on the ejector by adhesive bonding using a specific primer and a cyanoacrylate adhesive. Preferably, the silicone is cast on a substrate material, forming a silicone insert, which is applied on the ejector either by adhesive bonding between the ejector surface and the substrate material or by mechanical mounting. Otherwise, the silicone layer can be directly cast on the ejector forming the rigid support 52.

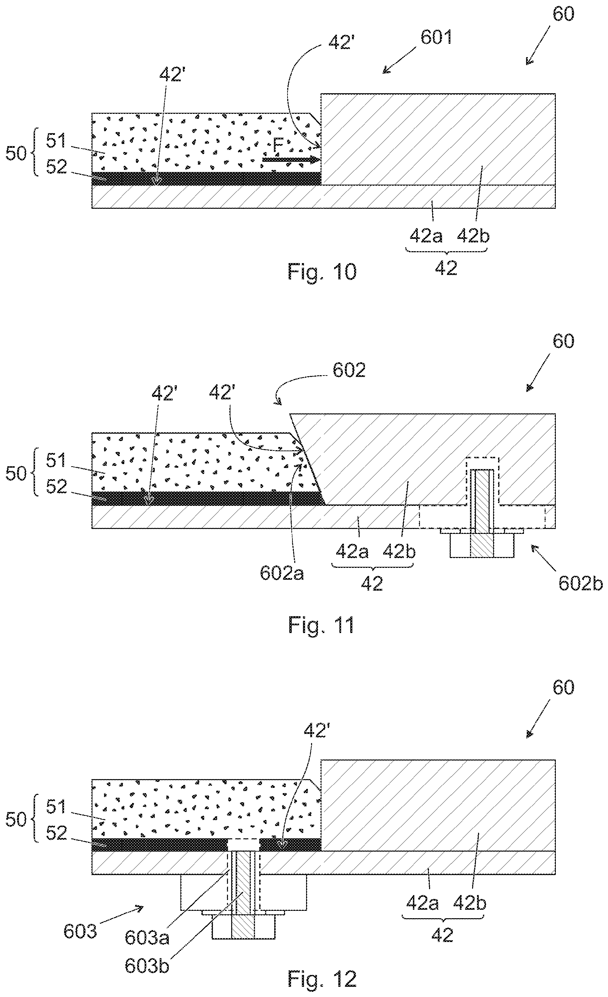

Another aspect to be considered precisely to be able to change efficiently and rapidly the mould insert 50 with the top elastomeric or silicone layer 51, relates to the fixing means for removable attachment of the mould insert 50 to the first compression tool formed by the lower compression tool 42 in the figures. Figures 10 to 15 presenting several possibilities of fixing means 60 for the tool assemblies 40 according to the invention are now described. In the first compression tool 42 are distinguished a bottom portion 42a and a side portion 42b, which both delimit the useful face 42'.

In a first variant of the fixing means 60, shown in figure 10, the fixing means is a mounting system which is arranged to create a friction force exerted by said elastomeric layer 51 and possibly partly by the material of the support 52 on said side portion 42b of the useful face 42' of the first compression tool 42. This friction fixing means 601 is based on friction force F at least between the edge of the elastomeric/silicone layer 51 and the first compression tool 42, on the lateral wall of the first compression tool 42, namely on the area of the useful face 42' of the side portion 42b of the first compression tool 42. This friction force F provides enough force to keep the mould insert 50 well-positioned inside the first compression tool 42. For the release of the mould insert 50, a higher force is needed to overcome the friction force F and thus remove the mould insert 50 for replacement.

This first variant of the fixing means 60 can be used for all of the first to fifth type of mould inserts 50 previously described.

In a second variant of the fixing means 60, shown in figure 11, the fixing means is a mounting system formed by an undercut fixing means 602. This undercut fixing means 602 comprises a recess 602a defined by either or both bottom portion 42a and side portion 42b of the useful face 42' of the first compression tool 42, said recess 602a retaining the edge of the mould insert 50 (support 52 and elastomeric/silicone layer 51). In figure 11, the recess 602a is an undercut at the location of the lateral wall of the first compression tool 42, namely on the area of the useful face 42' of the side portion 42b of the first compression tool 42. The location of undercut is not limited to the side borders of the first compression tool 42 as there could be also sections in the first compression tool 42 forming undercuts with the material of the support 52 . Here, in the example shown in figure 11, the lateral wall of the side portion 42b of the first compression tool 42 is bevelled: this forms a female dovetail shape edge of the first compression tool 42 which retains the edge of the mould insert 50 (support 52 and elastomeric/silicone layer 51) well-positioned inside the first compression tool 42.

Such an undercut fixing means 602 provides an interlocking mechanism using the first compression tool 42 side wall. In this second variant, the mould insert 50 (support 52 and elastomeric/silicone layer 51) is highly secured by this undercut and release of the mould insert 50 can only be triggered by removing the undercut, namely by removing or taking away the side portion 42b. Thus, the undercut on the lower compression tool side wall can be removed by unfastening the locking system 602b of the side portion 42b or parts of the side portion 42b with respect to the bottom portion 42a of the first compression tool 42. This locking system 602b can be a fixed reversible mounting (i.e. screw and threaded/tapped hole) or sliding mounting enabling respectively reversible withdrawal or moving apart of the side portion 42b equipped with the recess 602a with respect to the bottom portion 42a.

This second variant of the fixing means 60 can be combined with the first variant of the fixing means 60 : the combination of the friction fixing means 601 and of the undercut fixing means 602 provides a very safe locking of the mould insert 50 in the first compression tool 42, while being easy to remove for replacement of the mould insert 50.

This second variant of the fixing means 60 can be used for all of the first to fifth type of mould inserts 50 previously described.

In other variants of the fixing means 60, said fixing means 60 is arranged with additional element(s) to the mould insert and to the first compression tool 42 to create a mechanical or chemical bond between the mould insert 50 and the bottom portion 42a of the useful face 42' of the first compression tool 42. Examples of those types of variants are shown in figures 12 to 15.

In a third variant of the fixing means 60, shown in figure 12, the fixing means is a mounting system formed by a back-screw fixing means 603. To that end, the rigid substrate material forming the support 52 is used to secure the terminal end of a screw which is applied from the back of the first compression tool 42.

Preferably, said fixing means comprises one or multiple tapped hole 603a extending in the support 52 of the mould insert 50 and in the bottom portion of the first compression tool 42, and screws 603b cooperating with that tapped holes 603a.

With this back-screw fixing means 603 solution, a fixed mounting with high security to premature failure and on-demand release of the mould insert 50 by unscrewing is provided.

This third variant of the fixing means 60 can be used for the previously described second type of mould inserts 50 (thermoset composite support), third type of mould inserts 50 (thermoplastic composite support) and fifth type of mould inserts 50 (if the metallic support is a metal grid).

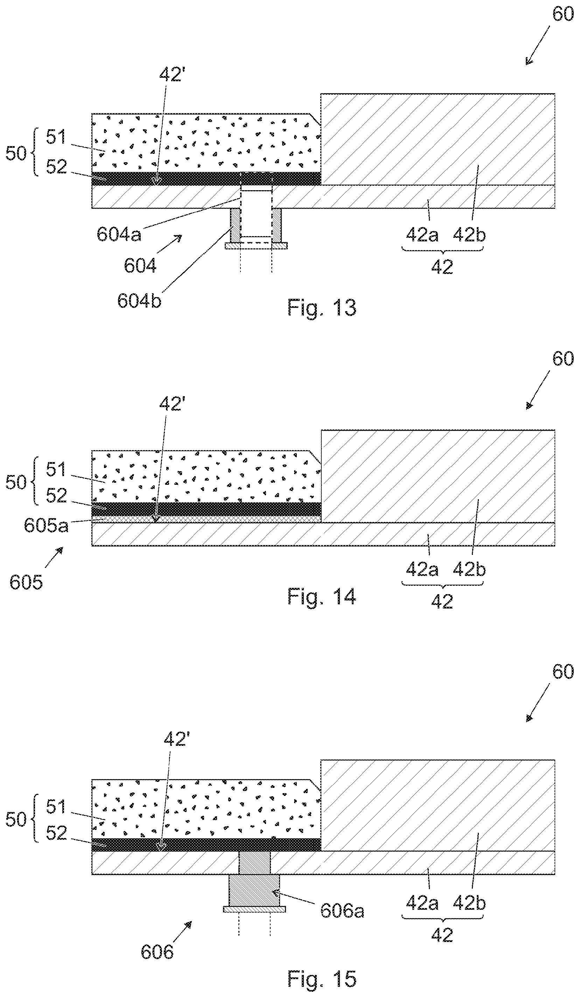

In a fourth variant of the fixing means 60, shown in figure 13, the fixing means 60 is a mounting system formed by a vacuum-suction fixing means 604,

This vacuum-suction fixing means 604 is based on the suction of the mould insert 50 (support 52 and elastomeric/silicone layer 51) using e.g. Venturinozzles or vacuum-pumps and thus pulling the mould insert 50 to the surface of the first compression tool 42. On-demand release of the mould insert 50 is triggered only by removing the vacuum suction.

Preferably, said vacuum-suction fixing means 604 comprises one or multiple through hole(s) 604a not extending in the support 52 of the mould insert 50, extending in the bottom portion 42a of the first compression tool 42, and a vacuum system with a connector 604b having an opening in communication with said through hole(s) 604a.

This fourth variant of the fixing means 60 can be used for all of the first to fifth type of mould inserts 50 previously described.

In a fifth variant of the fixing means 60, shown in figure 14, the fixing means 60 is a chemical bounding system formed by a hot-melt adhesive fixing means 605.

This hot-melt adhesive fixing means 605 is based on applying an adhesive bonding layer 605a between the mould insert 50 (support 52 and elastomeric/silicone layer 51) and the surface of the first compression tool 42. The processing properties of the adhesive bonding layer 605a must withstand the common processing conditions for the materials of composite products 30 to be manufactured in the tool assembly 40. Release of the mould insert 50 is triggered by heating of the tool above melting temperature of the adhesive bonding layer 605a and thus reducing the adhesion significantly, which enable release of the mould insert 50. In a possible embodiment, this adhesive bonding layer 605a has temperature resistance in operation which is at least 20°C higher than the processing temperature of the tool assembly. The range of these temperatures relates more precisely to the processing temperature of the first compression tool 42. In the case of 80°C tooling temperature, the minimum temperature resistance for the adhesive bonding layer 605a is 100°C, and for 120°C tooling temperature, the minimum temperature resistance for the adhesive bonding layer 605a is at least 140°C respectively. Alternatively, a standard adhesive could be added as adhesive bonding layer 605a on local areas between the support layer 52 and the first compression tool 42 without having any "deactivation" temperature for removal of the mould insert 50. The mould insert 50 will be removed by overcoming the adhesion force between the mould insert 50 and the first compression tool 42, and then the first compression tool 42 will be cleaned before a new mould insert 50 can be placed inside the first compression tool 42.

This fifth variant of the fixing means 60 is preferably used for any of the second to fifth type of mould inserts 50 previously described.

In a sixth variant of the fixing means 60, shown in figure 15, the fixing means 60 is a mounting system formed by an electromagnetic fixing means 606.

This electromagnetic fixing means 606 is based on use of electromagnets for mounting the support 52, which consists of a magnetic metal sheet or has at defined areas magnetic metal elements.

Preferably, for implementation of said electromagnetic fixing means 606, the support 52 of the mould insert 50 comprises at least one metallic magnetic portion, and said electromagnetic fixing means 606 comprises further an electromagnet system with an electromagnet 606a facing said metallic magnetic portion.

This sixth variant of the fixing means 60 is preferably used for the fifth type of mould insert 50 previously described, namely with the metallic support 52e. In addition, the fixing means 60 could be used for other substrate solutions if a metallic counterpart is added in the substrate structure, e.g. local metallic film or insert.

Regarding ejectors, their design has to take the implemented fixing means 60 into account. Partly raised edge designs could contribute to having an alternative mounting by using friction and interlocking of the mould insert 50 (support 52 and elastomeric/silicone layer 51).

As it is an advantage to only need one first compression tool 42 for manufacturing the whole mould insert 50, namely building the support 52 and casting the elastomeric/silicone layer 51, it could be possible to use supplementary lower compression tools, made e.g. of aluminium or composite materials. They would allow manufacturing of the mould insert 50 independently from the first compression tool 42 used for part processing.

The preferred thickness for the elastomeric/silicone layer 51 is between 5 and 6 millimetres, but a thickness between 1 and 10 millimetres or between 3 and 10 millimetres of the elastomeric/silicone layer 51 is generally possible.

The preferred elastomeric layer 51 is silicone, also called silicon rubber. Other elastomeric material can also be used.

According to the present invention, several methods for manufacturing a thin-walled composite part with one ribbed face covered with ribs made from fibre yarns can be implemented, using the tool assembly as described in the present text. A few methods are now described, being non-limitative.

According to a first possibility for a method for manufacturing a thin-walled composite part with one ribbed face covered with ribs made from fibre yarns, it forms a prepreg-compression moulding process. Such a manufacturing process comprises the following steps:
- providing a tool assembly 40 as described in the present text;
- manufacturing a preform comprising yarns and resin;
- installing said preform in the first compression tool 42, on the elastomeric layer 51 of the mould insert 50, with at least part of said yarns facing said elastomeric layer 51;
- closing said tool assembly 40 in said moulding position, defining thereby a cavity accommodating said preform ;
- controlling the temperature of the first and second compression tools 42, 41 so as to solidify said resin, so that the external side of the solidified part which faces the mould insert 50 is ribbed.

According to a second possibility for a method for manufacturing a thin-walled composite part with one ribbed face covered with ribs made from fibre yarns, it forms a Resin Transfer Moulding (RTM) process. Such a manufacturing process comprises the following steps:
- providing a tool assembly 40 as described in the present text;
- manufacturing a preform comprising yarns;
- installing said preform in the first compression tool 42, on the elastomeric layer 51 of the mould insert 50, with at least part of said yarns facing said elastomeric layer 51;
- closing said tool assembly 40 in said moulding position, defining thereby a cavity accommodating said preform ;
- injecting in said cavity resin and catalyst under pressure where it permeates said yarns;
- controlling the temperature of the first and second compression tools 42,41 so as to solidify said resin, so that the external side of the solidified part which faces the mould insert 50 is ribbed.

According to a third possibility for a method of manufacturing a thin-walled composite part with one ribbed face covered with ribs made from fibre yarns, it forms a process of compression moulding for thermoplastic materials. Such a manufacturing process comprises the following steps:
- providing a tool assembly 40 as described in the present text;
- manufacturing a preform comprising impregnated yarns with thermoplastic materials;
- external heating of the preform above melting temperature of the thermoplastic material;
- installing said preform in the first compression tool 42, on the elastomeric layer 51 of the mould insert 50, with at least part of said yarns facing said elastomeric layer 51;
- closing said tool assembly 40 in said moulding position;
- controlling the temperature of the first and second compression tools 42,41 so as to solidify the thermoplastic materials, and so that the external side of the solidified part which faces the mould insert 50 is ribbed.

In the present text, when relating to the description of the examples shown in the figures, only the first compression tool 42 has a mould insert 50 on its useful face 42', the other second compression tool 42 having no mould insert 50 on its useful face 41'. The invention also applies for the situation where both first compression tool 42 and second compression tool 42 have a mould insert 50 on their useful face 42', respectively 41'. In that situation, the composite product 30 obtained can be a double ribbed face composite product 30.

### Reference signs used in the figures

- 20: Yarns
- 30: Composite product
- 31: First layer
- 32: Second layer
- 40: Tool assembly
- 41: Second compression tool (core half or male) = upper compression tool in the examples shown in the figures
- 41': Useful face of the upper /second compression tool
- 42: First compression tool (cavity half or female) = lower compression tool in the examples shown in the figures
- 42a: Bottom portion
- 42b: Side portion
- 42': Useful face of the lower/first compression tool
- 43: Mask
- 43a: Through hole for injecting elastomeric layer 51
- 43b: Through hole for air evacuation
- 50: Mould insert
- 51: Flexible or elastomeric layer, such as silicone layer
- 52: Support
- 52a: Composite support with draped dry textile
- 52b: Thermoset composite support
- 52c: Thermoplastic composite support
- 52d: Reinforced film support
- 52e: Metallic support
- 60: Fixing means
- 601: Friction fixing means
- 602: Undercut fixing means
- 602a: Recess
- 602b: Locking system
- 603: Back-screw fixing means
- 603a: Tapped hole
- 603b: Screw
- 604: Vacuum suction fixing means
- 604a: Through hole
- 604b: Connector
- 605: (Hot-melt) adhesive fixing means
- 605a: Adhesive bonding layer
- 606: Electromagnetic fixing means
- 606a: Electromagnet
- F: Friction force
- F1: Even face
- F2: Ribbed face

## Claims

1. Tool assembly (40) for manufacturing thin-walled composite part with one ribbed face covered with ribs made from fibre yarns, comprising:
- a first compression tool (42) with a useful face (42'),
- a second compression tool (41) with a useful face (41'),
said first and second compression tools (42, 41) being arranged to cooperate together with their useful face (42', 41') facing each other in a moulding position where said useful faces (42', 41') delimit a cavity, **characterized in that** it further comprises a mould insert (50) placed on the useful face (42') of the first compression tool (42),
wherein said mould insert (50) comprises a support (52) made in a first material having a first tensile Young's modulus larger than 1 GPa, which support is removably attached on the useful face (42') of the first compression tool (42) and a elastomeric layer (51) mounted on the support (52), said elastomeric layer (51) being made in a second material having a second tensile Young's modulus, wherein said second tensile Young's modulus is at least 100 times smaller than the first tensile Young's modulus, and wherein said elastomeric layer (51) has a thickness between 1 and 10 millimetres.

2. Tool assembly (40) as in claim 1, wherein said second material has a hardness which is less or equal to 40 shore A, preferably between 15 and 35 shore A.

3. Tool assembly (40) as in claim 1 or 2, wherein in said moulding position of said first and second compression tools (42, 41), a tool gap volume between the elastomeric layer (51) and the second compression tool (41) corresponds to 0.9 to 1.1 times the end volume of the thin-walled composite part moulded in said tool assembly (40).

4. Tool assembly (40) as in any of claims 1 to 3, wherein said support is a composite material support (52a; 52b).

5. Tool assembly (40) as in claim 4, wherein said composite support is formed by a thermoset composite layer (52b) comprising a textile fabric impregnated with a thermoset resin matrix wherein said fabric is formed by carbon, glass, polymer or natural fibres or a combination of said fibres.

6. Tool assembly (40) as in claim 4, wherein said composite support is formed by a thermoplastic composite layer (52c) comprising a fabric impregnated with thermoplastic matrix, wherein said fabric is formed by carbon, glass, polymer or natural fibres or a combination of said fibres.

7. Tool assembly (40) as in any of claims 1 to 6, wherein said first material has a first tensile Young's modulus larger than 10 GPa,
said elastomeric layer (51) being made in a second material having a second tensile Young's modulus, wherein said second tensile Young's modulus is at least 1000 times smaller than the first tensile Young's modulus.

8. Tool assembly (40) as in claim 7, wherein said support (52e) is metallic, such as a metallic mesh, a metallic sheet, a metallic plate.

9. Tool assembly (40) as in any of claims 1 to 8, wherein said elastomeric layer (51) is a silicone layer

10. Tool assembly (40) according to any of claims 1 to 10, wherein it further comprises fixing means (60) for removable attachment of the mould insert (50) to the first compression tool (42), said useful face (42') comprising a bottom portion (42a) and a side portion (42b).

11. Tool assembly (40) according to claim 10, wherein said fixing means is arranged to create a friction force exerted by said elastomeric layer (51) on said side portion of the useful face (42') of the first compression tool (42) or wherein said fixing mean comprises a recess (602a) defined by either or both bottom portion (42a) and side portion (42b) of the useful face of the first compression tool (42), said recess (602a) retaining the edge of the mould insert (50) or wherein said fixing means comprises one or multiple tapped holes (603a) extending in the support (52) of the mould insert (50) and in the bottom portion of the first compression tool (42), and screws (603b) cooperating with the tapped holes (603a) or wherein said fixing mean comprises one or multiple through holes (604a) extending in the bottom portion (42a) of the first compression tool (42), and a vacuum system with a connector (604b) having an opening in communication with said through holes (604a).

12. Tool assembly (40) according to claim 10, wherein said fixing mean comprises either a continuous adhesive layer or local adhesive points (605a) between the support of the mould insert (50) and the useful face of the first compression tool (42) and wherein said adhesive bonding layer (605a) has a temperature resistance in which is at least 20°C higher than the processing temperature of the tool assembly.

13. A method for manufacturing a thin-walled composite part with one ribbed face covered with ribs made from fibre yarns, wherein it comprises the following steps:
- providing a tool assembly (40) as defined in any of claims 1 to 12;
- manufacturing a preform comprising yarns and resin;
- installing said preform in the first compression tool (42), on the elastomeric layer (51) of the mould insert (50), with at least part of said yarns facing said elastomeric layer (51);
- closing said tool assembly (40) in said moulding position, defining thereby a cavity accommodating said preform;
- controlling the temperature of the first and second compression tools (42, 41) so as to solidify said resin, so that the external side of the solidified part which faces the mould insert (50) is ribbed.

14. A method for manufacturing a thin-walled composite part with one ribbed face covered with ribs made from fibre yarns, wherein it comprises the following steps:
- providing a tool assembly (40) as defined in any of claims 1 to 12;
- manufacturing a preform comprising yarns:
- installing said preform in the first compression tool (42), on the elastomeric layer (51) of the mould insert (50), with at least part of said yarns facing said elastomeric layer (51);
- closing said tool assembly (40) in said moulding position, defining thereby a cavity accommodating said preform;
- injecting in said cavity resin and catalyst under pressure where it permeates said yarns
- controlling the temperature of the first and second compression tools (42, 41) so as to solidify said resin, so that the external side of the solidified part which faces the mould insert (50) is ribbed.

15. A method for manufacturing a thin-walled composite part with one ribbed face covered with ribs made from fibre yarns, wherein it comprises the following steps:
- providing a tool assembly (40) as defined in any of claims 1 to 12;
- manufacturing a preform comprising impregnated yarns with thermoplastic materials;
- external heating of the preform above melting temperature of the thermoplastic material;
- installing said preform in the first compression tool (42), on the elastomeric layer (51) of the mould insert (50), with at least part of said yarns facing said elastomeric layer (51);
- closing said tool assembly (40) in said moulding position;
- controlling the temperature of the first and second compression tools (42, 41) so as to solidify the thermoplastic materials, and so that the external side of the solidified part which faces the mould insert (50) is ribbed.

## Patentansprüche

1. Werkzeuganordnung (40) zur Herstellung eines dünnwandigen Verbundteils mit einer gerippten Fläche, die mit Rippen bedeckt ist, die aus Fasergarnen angefertigt sind, umfassend:
- ein erstes Kompressionswerkzeug (42) mit einer Nutzfläche (42'),
- ein zweites Kompressionswerkzeug (41) mit einer Nutzfläche (41'), wobei das erste und das zweite Kompressionswerkzeug (42, 41) so angeordnet sind, dass sie zusammen mit ihren Nutzflächen (42', 41'), die einander zugewandt sind, in einer Formposition zusammenwirken, in der die Nutzflächen (42', 41') einen Hohlraum begrenzen, **dadurch gekennzeichnet, dass** sie ferner einen Formeinsatz (50) umfasst, der auf der Nutzfläche (42') des ersten Kompressionswerkzeugs (42) angeordnet ist, wobei der Formeinsatz (50) einen Träger (52), der aus einem ersten Material angefertigt ist, das einen ersten Zugelastizitätsmodul größer als 1 GPa aufweist, wobei der Träger entfernbar an der Nutzfläche (42') des ersten Kompressionswerkzeugs (42) befestigt ist, und eine Elastomerschicht (51) umfasst, die auf dem Träger (52) montiert ist, wobei die Elastomerschicht (51) aus einem zweiten Material mit einem zweiten Zugelastizitätsmodul angefertigt ist, wobei der zweite Zugelastizitätsmodul mindestens 100-mal kleiner ist als der erste Zugelastizitätsmodul und wobei die Elastomerschicht (51) eine Dicke zwischen 1 und 10 Millimeter aufweist.

2. Werkzeuganordnung (40) nach Anspruch 1, wobei das zweite Material eine Härte aufweist, die kleiner oder gleich 40 Shore A, vorzugsweise zwischen 15 und 35 Shore A ist.

3. Werkzeuganordnung (40) nach Anspruch 1 oder 2, wobei in der Formposition des ersten und des zweiten Kompressionswerkzeugs (42, 41) ein Werkzeugspaltvolumen zwischen der Elastomerschicht (51) und dem zweiten Kompressionswerkzeug (41) dem 0,9- bis 1,1-fachen des Endvolumens des dünnwandigen Verbundteils entspricht, das in der Werkzeuganordnung (40) geformt ist.

4. Werkzeuganordnung (40) nach einem der Ansprüche 1 bis 3, wobei der Träger ein Verbundmaterialträger (52a; 52b) ist.

5. Werkzeuganordnung (40) nach Anspruch 4, wobei der Verbundträger durch eine duroplastische Verbundschicht (52b) gebildet ist, die ein Textilgewebe umfasst, das mit einer duroplastischen Harzmatrix imprägniert ist, wobei das Gewebe durch Kohlenstoff-, Glas-, Polymer- oder Naturfasern oder eine Kombination der Fasern gebildet ist.

6. Werkzeuganordnung (40) nach Anspruch 4, wobei der Verbundträger durch eine thermoplastische Verbundschicht (52c) gebildet ist, die ein Gewebe umfasst, das mit einer thermoplastischen Matrix imprägniert ist, wobei das Gewebe durch Kohlenstoff-, Glas-, Polymer- oder Naturfasern oder eine Kombination der Fasern gebildet ist.

7. Werkzeuganordnung (40) nach einem der Ansprüche 1 bis 6, wobei das erste Material einen ersten Zugelastizitätsmodul größer als 10 GPa aufweist,
wobei die Elastomerschicht (51) aus einem zweiten Material mit einem zweiten Zugelastizitätsmodul angefertigt ist, wobei der zweite Zugelastizitätsmodul mindestens 1000-mal kleiner ist als der erste Zugelastizitätsmodul.

8. Werkzeuganordnung (40) nach Anspruch 7, wobei der Träger (52e) aus Metall ist, wie etwa ein Metallnetz, ein Metallblech, eine Metallplatte.

9. Werkzeuganordnung (40) nach einem der Ansprüche 1 bis 8, wobei die Elastomerschicht (51) eine Silikonschicht ist.

10. Werkzeuganordnung (40) nach einem der Ansprüche 1 bis 10, wobei sie ferner Befestigungsmittel (60) zur entfernbaren Befestigung des Formeinsatzes (50) an dem ersten Kompressionswerkzeug (42) umfasst, wobei die Nutzfläche (42') einen Bodenabschnitt (42a) und einen Seitenabschnitt (42b) umfasst.

11. Werkzeuganordnung (40) nach Anspruch 10, wobei das Befestigungsmittel angeordnet ist, um eine Reibungskraft zu erzeugen, die durch die Elastomerschicht (51) auf den Seitenabschnitt der Nutzfläche (42') des ersten Kompressionswerkzeugs (42) ausgeübt wird, oder wobei das Befestigungsmittel eine Aussparung (602a) umfasst, die durch den Bodenabschnitt (42a) und/oder den Seitenabschnitt (42b) der Nutzfläche des ersten Kompressionswerkzeugs (42) definiert ist, wobei die Aussparung (602a) den Rand des Formeinsatzes (50) hält oder wobei das Befestigungsmittel eine oder mehrere Gewindebohrungen (603a), die sich in den Träger (52) des Formeinsatzes (50) und in den Bodenabschnitt des ersten Kompressionswerkzeugs (42) erstrecken, und Schrauben (603b) umfasst, die mit den Gewindebohrungen (603a) zusammenwirken, oder wobei das Befestigungsmittel ein oder mehrere Durchgangslöcher (604a), die sich in den Bodenabschnitt (42a) des ersten Kompressionswerkzeugs (42) erstrecken, und ein Vakuumsystem mit einem Verbinder (604b) umfasst, der eine Öffnung in Verbindung mit den Durchgangslöchern (604a) aufweist.

12. Werkzeuganordnung (40) nach Anspruch 10, wobei das Befestigungsmittel entweder eine durchgehende Klebeschicht oder lokale Klebepunkte (605a) zwischen dem Träger des Formeinsatzes (50) und der Nutzfläche des ersten Kompressionswerkzeugs (42) umfasst und wobei die Klebeverbindungsschicht (605a) einen Temperaturwiderstand aufweist, der mindestens 20 °C höher ist als die Verarbeitungstemperatur der Werkzeuganordnung.

13. Verfahren zur Herstellung eines dünnwandigen Verbundteils mit einer gerippten Fläche, die mit Rippen bedeckt ist, die aus Fasergarnen angefertigt sind, wobei es die folgenden Schritte umfasst:
- Bereitstellen einer Werkzeuganordnung (40) nach einem der Ansprüche 1 bis 12;
- Herstellen eines Vorformlings, der Garne und Harz umfasst;
- Installieren des Vorformlings in dem ersten Kompressionswerkzeug (42) auf der Elastomerschicht (51) des Formeinsatzes (50), wobei mindestens ein Teil der Garne der Elastomerschicht (51) zugewandt ist;
- Schließen der Werkzeuganordnung (40) in der Formposition, wodurch ein Hohlraum definiert wird, der den Vorformling aufnimmt;
- Steuern der Temperatur des ersten und des zweiten Kompressionswerkzeugs (42, 41), um das Harz zu verfestigen, so dass die Außenseite des verfestigten Teils, die dem Formeinsatz (50) zugewandt ist, gerippt ist.

14. Verfahren zur Herstellung eines dünnwandigen Verbundteils mit einer gerippten Fläche, die mit Rippen bedeckt ist, die aus Fasergarnen angefertigt sind, wobei es die folgenden Schritte umfasst:
- Bereitstellen einer Werkzeuganordnung (40) nach einem der Ansprüche 1 bis 12;
- Herstellen eines Vorformlings, der Garne umfasst:
- Installieren des Vorformlings in dem ersten Kompressionswerkzeug (42) auf der Elastomerschicht (51) des Formeinsatzes (50), wobei mindestens ein Teil der Garne der Elastomerschicht (51) zugewandt ist;
- Schließen der Werkzeuganordnung (40) in der Formposition, wodurch ein Hohlraum definiert wird, der den Vorformling aufnimmt;
- Einspritzen von Harz und eines Katalysators in den Hohlraum unter Druck, wo es die Garne durchdringt;
- Steuern der Temperatur des ersten und des zweiten Kompressionswerkzeugs (42, 41), um das Harz zu verfestigen, so dass die Außenseite des verfestigten Teils, die dem Formeinsatz (50) zugewandt ist, gerippt ist.

15. Verfahren zur Herstellung eines dünnwandigen Verbundteils mit einer gerippten Fläche, die mit Rippen bedeckt ist, die aus Fasergarnen angefertigt sind, wobei es die folgenden Schritte umfasst:
- Bereitstellen einer Werkzeuganordnung (40) nach einem der Ansprüche 1 bis 12;
- Herstellen eines Vorformlings, der imprägnierte Garne mit thermoplastischen Materialien umfasst;
- externes Erhitzen des Vorformlings über die Schmelztemperatur des thermoplastischen Materials;
- Installieren des Vorformlings in dem ersten Kompressionswerkzeug (42) auf der Elastomerschicht (51) des Formeinsatzes (50), wobei mindestens ein Teil der Garne der Elastomerschicht (51) zugewandt ist;
- Schließen der Werkzeuganordnung (40) in der Formposition;-Steuern der Temperatur des ersten und des zweiten Kompressionswerkzeugs (42, 41), um so die thermoplastischen Materialien zu verfestigen, und so, dass die Außenseite des verfestigten Teils, die dem Formeinsatz (50) zugewandt ist, gerippt ist.

## Revendications

1. Ensemble d'outils (40) pour la fabrication d'une pièce composite à paroi mince présentant une face nervurée recouverte de nervures réalisées en fils de fibres, comprenant :
- un premier outil de compression (42) avec une face utile (42'),
- un deuxième outil de compression (41) avec une face utile (41'), lesdits premier et deuxième outils de compression (42, 41) étant agencés pour coopérer avec leurs faces utiles (42', 41') situées face à face en position de moulage dans lequel lesdites faces utiles (42', 41') délimitent une cavité, **caractérisé en ce qu'**il comprend en outre un insert de moule (50) placé sur la face utile (42') du premier outil de compression (42), ledit insert de moule (50) comprenant un support (52) réalisé en un premier matériau ayant un premier module de Young en traction supérieur à 1 GPa, lequel support est fixé de façon amovible sur la face utile (42') du premier outil de compression (42), et une couche en élastomère (51) montée sur le support (52), ladite couche en élastomère (51) étant réalisée en un deuxième matériau ayant un deuxième module de Young en traction, dans lequel ledit deuxième module de Young en traction est au moins 100 fois inférieur au premier module de Young en traction, et dans lequel ladite couche en élastomère (51) a une épaisseur entre 1 et 10 millimètres.

2. Ensemble d'outils (40) selon la revendication 1, dans lequel ledit deuxième matériau a une dureté inférieure ou égale à 40 shore A, de préférence entre 15 et 35 shore A.

3. Ensemble d'outils (40) selon la revendication 1 ou 2, dans lequel en position de moulage desdits premier et deuxième outils de compression (42, 41), un volume d'écart d'outils entre la couche en élastomère (51) et le deuxième outil de compression (41) correspond à 0,9 à 1,1 fois le volume final de la pièce composite à paroi mince moulée dans ledit ensemble d'outils (40).

4. Ensemble d'outils (40) selon l'une quelconque des revendications 1 à 3, dans lequel ledit support est un support en matériau composite (52a ; 52b).

5. Ensemble d'outils (40) selon la revendication 4, dans lequel ledit support composite est formé par une couche composite thermodurcissable (52b) comprenant un tissu textile imprégné d'une matrice de résine thermodurcissable, dans lequel ledit tissu est formé par des fibres de carbone, de verre, de polymère ou des fibres naturelles ou une combinaison desdites fibres.

6. Ensemble d'outils (40) selon la revendication 4, dans lequel ledit support composite est formé par une couche composite thermoplastique (52c) comprenant un tissu imprégné de matrice thermoplastique, dans lequel ledit tissu est formé par des fibres de carbone, de verre, de polymère ou des fibres naturelles ou une combinaison desdites fibres.

7. Ensemble d'outils (40) selon l'une quelconque des revendications 1 à 6, dans lequel ledit premier matériau a un premier module de Young en traction supérieur à 10 GPa, ladite couche en élastomère (51) étant réalisée en un deuxième matériau ayant un deuxième module de Young en traction, dans lequel ledit deuxième module de Young en traction est au moins 1000 fois inférieur au premier module de Young en traction.

8. Ensemble d'outils (40) selon la revendication 7, dans lequel ledit support (52e) est métallique, tel qu'une grille métallique, une tôle métallique, une plaque métallique.

9. Ensemble d'outils (40) selon l'une quelconque des revendications 1 à 8, dans lequel ladite couche en élastomère (51) est une couche de silicone.

10. Ensemble d'outils (40) selon l'une quelconque des revendications 1 à 9, dans lequel il comprend en outre des moyens de fixation (60) pour la fixation amovible de l'insert de moule (50) au premier outil de compression (42), ladite face utile (42') comprenant une portion inférieure (42a) et une portion latérale (42b).

11. Ensemble d'outils (40) selon la revendication 10, dans lequel lesdits moyens de fixation sont agencés pour créer une force de friction exercée par ladite couche en élastomère (51) sur ladite portion latérale de la face utile (42') du premier outil de compression (42) ou bien dans lequel lesdits moyens de fixation comprennent un évidement (602a) défini par la portion inférieure (42a) et/ou la portion latérale (42b) de la face utile du premier outil de compression (42), ledit évidement (602a) retenant l'arête de l'insert de moule (50) ou bien dans lequel lesdits moyens de fixation comprennent un ou plusieurs trous filetés (603a) s'étendant dans le support (52) de l'insert de moule (50) et dans la portion inférieure du premier outil de compression (42), et des vis (603b) coopérant avec les trous filetés (603a) ou bien dans lequel lesdits moyens de fixation comprennent un ou plusieurs trous débouchants (604a) s'étendant dans la portion inférieure (42a) du premier outil de compression (42), et un système de vide avec un connecteur (604b) ayant une ouverture en communication avec lesdits trous débouchants (604a).

12. Ensemble d'outils (40) selon la revendication 10, dans lequel lesdits moyens de fixation comprennent soit une couche adhésive continue, soit des points adhésifs locaux (605a) entre le support de l'insert de moule (50) et la face utile du premier outil de compression (42), et dans lequel ladite couche de liaison adhésive (605a) a une tenue thermique d'au moins 20°C supérieure à la température de traitement de l'ensemble d'outils.

13. Procédé de fabrication d'une pièce composite à paroi mince à face nervurée, recouverte de nervures réalisées en fils de fibres, comprenant les étapes suivantes :
- fournir un ensemble d'outils (40) tel que défini selon l'une quelconque des revendications 1 à 12 ;
- fabriquer une préforme comprenant des fils et de la résine ;
- installer ladite préforme dans le premier outil de compression (42), sur la couche en élastomère (51) de l'insert de moule (50), au moins une partie desdits fils faisant face à ladite couche en élastomère (51) ;
- fermer ledit ensemble d'outils (40) en position de moulage, définissant ainsi une cavité accueillant ladite préforme ;
- contrôler la température des premier et deuxième outils de compression (42, 41) afin de solidifier ladite résine, de sorte que la face externe de la pièce solidifiée qui fait face à l'insert de moule (50) soit nervurée.

14. Procédé de fabrication d'une pièce composite à paroi mince à face nervurée, recouverte de nervures réalisées en fils de fibres, comprenant les étapes suivantes :
- fournir un ensemble d'outils (40) tel que défini selon l'une quelconque des revendications 1 à 12 ;
- fabriquer une préforme comprenant des fils ;
- installer ladite préforme dans le premier outil de compression (42), sur la couche en élastomère (51) de l'insert de moule (50), avec au moins une partie desdits fils faisant face à ladite couche en élastomère (51) ;
- fermer ledit ensemble d'outils (40) en position de moulage, définissant ainsi une cavité accueillant ladite préforme ;
- injecter dans ladite cavité de la résine et du catalyseur sous pression imprègnant desdits fils ;
- contrôler la température des premier et deuxième outils de compression (42, 41) afin de solidifier ladite résine, de sorte que la face externe de la pièce solidifiée qui fait face à l'insert de moule (50) soit nervurée.

15. Procédé de fabrication d'une pièce composite à paroi mince à face nervurée, recouverte de nervures réalisées en fils de fibres, comprenant les étapes suivantes :
- fournir un ensemble d'outils (40) tel que défini selon l'une quelconque des revendications 1 à 12 ;
- fabriquer une préforme comprenant des fils imprégnés de matériaux thermoplastiques ;
- préchauffer la préforme au-dessus de la température de fusion du matériau thermoplastique ;
- installer ladite préforme dans le premier outil de compression (42), sur la couche en élastomère (51) de l'insert de moule (50), au moins une partie desdits fils faisant face à ladite couche en élastomère (51) ;
- fermer ledit ensemble d'outils (40) en position de moulage ;
- contrôler la température des premier et deuxième outils de compression (42, 41) afin de solidifier les matériaux thermoplastiques, de sorte que la face externe de la pièce solidifiée qui fait face à l'insert de moule (50) soit nervurée.
